# EUROPÄISCHE PATENTSCHRIFT

(11) **EP 2 952 482 B1**
(45) Veröffentlichungstag und Bekanntmachung des Hinweises auf die Patenterteilung: **21.11.2018**
(21) Anmeldenummer: 15167514.7
(22) Anmeldetag: 13.05.2015
(51) Int. Cl.: C02F 1/66, C02F 1/68, B01F 1/00, C02F 7/00

(54) **VORRICHTUNG ZUR AUFBEREITUNG VON WASSER EINES GEWÄSSERS**
DEVICE FOR THE TREATMENT OF WATER IN A BODY OF WATER
DISPOSITIF DE PRÉPARATION D'EAU D'UN COURS D'EAU

(30) Priorität: 04.06.2014 DE 102014210655
(43) Veröffentlichungstag der Anmeldung: 09.12.2015
(73) Patentinhaber: Wirth, Rainer, 72250 Freudenstadt (DE)
(72) Erfinder: Wirth, Rainer, 72250 Freudenstadt (DE)
(74) Vertreter: DREISS Patentanwälte PartG mbB

(56) Entgegenhaltungen:
- DE-A1- 19 933 181
- DE-U1- 20 011 300
- GB-A- 2 243 151
- US-A- 5 185 085
- US-A- 5 256 309

## Beschreibung

Die Erfindung betrifft eine Vorrichtung zur Aufbereitung von Wasser eines Gewässers.

Aus der DE 20 2004 008 003 U1 ist eine Vorrichtung bekannt, mit der Wasser in einem Gewässer zirkuliert werden kann. Auf diese Weise kann die Qualität des Wassers, insbesondere der Sauerstoffgehalt des Wassers, verbessert werden.

Die Vorrichtung weist ein Rohr auf, mit dem das Wasser aus den unteren Schichten des Gewässers angesaugt und dann nach oben gefördert werden kann. Das obere Ende des Rohrs ist unterhalb der Wasseroberfläche angeordnet. Dort ist auch ein elektrisch angetriebenes Schaufelrad vorhanden, mit dem das Wasser in dem Rohr nach oben gefördert werden kann. Das angesaugte Wasser muss damit nicht über die Wasseroberfläche angehoben werden. Der Betrieb des Schaufelrads kann beispielsweise mit Hilfe einer photovoltaischen Anlage bewerkstelligt werden.

DE 199 33 181 A1 betrifft ein Verfahren zur Aufbereitung und Reinhaltung von Wasser. Einem außer Kontrolle geratenen Gewässer wird Kalkstein und/oder Kalklösung zugesetzt. Über eine Rohrleitung wird Wasser aus dem See hoch gepumpt, rieselt durch gelochte Rieselrohre auf die Kalksteine und gelangt an der Unterseite des Turms erneut in den See.

US 5,256,309 offenbart eine dissolution vessel, welche mit einer water pumping unit verbunden ist. Die dissolution vessel umfasst slaked lime.

US 5,185,085 offenbart ein Verfahren zum Hinzufügen eines Neutralisiers mittels eines Bootes. Oberflächenwasser wird angesaugt, um in eine Tiefe von mehr als 15 Fuß unterhalb der Wasseroberfläche geführt zu werden.

DE 200 11 300 U1 offenbart einen Reaktor zur Reinigung von Flüssigkeit. Der Reaktorbehälter ist mit einem granulierten Kalkstein gefüllt. Durch einen Überlaufauslass kann das in Reaktion mit dem granulierten Kalkstein getretene Wasser wieder in das Gewässer gelangen.

GB 2 243 151 A offenbart ein water-cleaning device, welches einen water-lifter nutzt.

Aufgabe der Erfindung ist es, eine Vorrichtung zur WasserAufbereitung zu schaffen, mit der eine weitere Verbesserung der Wasserqualität des Gewässers erreichbar ist.

Die Erfindung löst diese Aufgabe durch eine Vorrichtung nach dem Anspruch 1.

Erfindungsgemäß ist die Vorrichtung zur Aufbereitung von Wasser eines Gewässers mit einer ersten Anordnung versehen, mit der das Wasser des Gewässers durch ein Rohr nach oben förderbar ist. Weiterhin ist eine zweite Anordnung vorhanden, die ein kalkhaltiges Granulat enthält, an dem das Wasser vorbeiströmen kann, so dass das Wasser Kalkteilchen aufnehmen kann. Mit Hilfe der zweiten Anordnung ist es möglich, das Wasser mittels der Kalkteilchen zu entsäuern. Handelt es sich bei dem Gewässer um ein sogenanntes saures Gewässer, dessen Wasser also einen sauren ph-Wert aufweist, so kann mit Hilfe der Erfindung eine Verbesserung der Qualität des Wassers erreicht werden.

Die zweite Anordnung ist im Bereich der Wasseroberfläche des Gewässers angeordnet. Erfindungsgemäß ist eine Wanne vorgesehen, in der das Granulat enthalten ist, die mit dem Rohr verbunden ist, und durch die das Wasser hindurchführbar ist. Das Wasser wird also vorzugsweise vom Grund des Gewässers angesaugt und nach oben in den Bereich der Wasseroberfläche gefördert. Dort durchströmt das Wasser die Wanne und damit das Granulat. Auf diese Weise nimmt das Wasser Kalkteilchen auf, die dann zusammen mit dem Wasser wieder in das Gewässer abgegeben werden. Es entsteht somit eine Zirkulation des Wassers und der Kalkteilchen, was wiederum zu einer gleichmäßigen Entsäuerung des Gewässers führt.

Die zweite Anordnung weist zweckmäßigerweise eine Fördereinrichtung auf, mit der das Wasser von dem Rohr in Richtung zu einem Auslass förderbar und im Bereich der Wasseroberfläche in das Gewässer abgebbar ist.

Die Figuren 1, 3a und 3b zeigen eine schematische Seitenansicht und eine Perspektivdarstellung einer Ausführungsform einer Vorrichtung zum Aufbereiten von Wasser eines Gewässers.

Die Figur 2 zeigt eine Anordnung, die nicht Gegenstand der Erfindung ist. In der Figur 1 ist ein Gewässer 10 dargestellt, bei dem es sich insbesondere um ein stehendes Gewässer handelt. Die Wasseroberfläche des Gewässers 10 ist mit dem Bezugszeichen 11 gekennzeichnet.

Auf der Wasseroberfläche 11 des Gewässers 10 schwimmt eine erste Anordnung 13, die zum Ansaugen von Wasser vorgesehen ist. Die Anordnung 13 weist eine von Schwimmern 15 getragene Plattform 16 auf. Auf der Unterseite der Plattform 16 ist ein Rohr 17 angeordnet, das sich in etwa vertikaler Richtung innerhalb des Gewässers 10 nach unten erstreckt. Das obere Ende 18 des Rohrs 17 befindet sich unterhalb der Wasseroberfläche 11 und damit im Wasser. Das obere Ende 18 ist etwa 10 cm unterhalb der Wasseroberfläche 11 angeordnet, kann sich aber gegebenenfalls auch bis zu 100 cm unterhalb der Wasseroberfläche 11 befinden.

Auf der Plattform 16 ist ein Elektromotor 21 montiert, der über eine Welle 22 ein Schaufelrad 23 antreibt. Die Welle 22 verläuft etwa koaxial zu dem Rohr 17 und erstreckt sich von dem Elektromotor 21 bis in den oberen Bereich des Rohrs 17. Das Schaufelrad 23 ist im Inneren des Rohrs 17 unterhalb des oberen Endes 18 angeordnet. Das Schaufelrad 23 ist an dem freien Ende der Welle 22 befestigt und kann damit um eine etwa koaxial zum Rohr 17 verlaufende Achse rotieren.

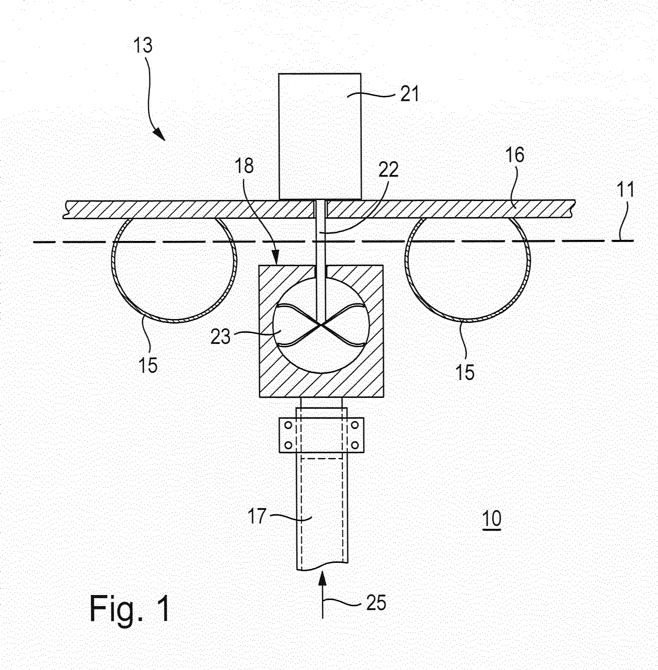

Das Schaufelrad 23 wird derart angetrieben, dass das Wasser in dem Rohr 17 nach oben bewegt wird. Dies ist in der Figur 1 durch den Pfeil 25 angedeutet. Damit ist es möglich, Wasser aus den tieferen Schichten des Gewässers 10 nach oben zu fördern. Am oberen Ende 18 des Rohrs 17 verteilt sich das geförderte Wasser in die Umgebung und verbindet sich dort mit dem in den oberen Schichten des Gewässers 10 vorhandenen Wasser. Aufgrund der Förderung von Wasser nach oben sinkt gleichzeitig Wasser aus den oberen Schichten des Gewässers 10 nach unten ab. Dies hat insgesamt eine Zirkulation des Wassers in vertikaler Richtung in dem Gewässer 10 zur Folge.

Die vorstehend anhand der Figur 1 beschriebene erste Anordnung 13 entspricht im Wesentlichen der Anordnung der eingangs bereits erwähnten DE 20 2004 008 003 U1.

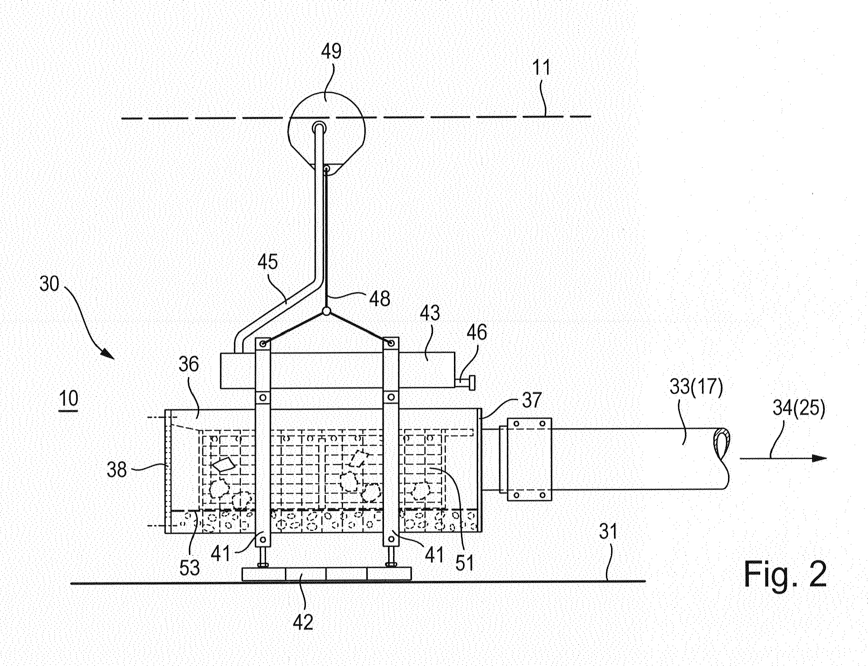

In der Figur 2 ist eine zweite Anordnung 30 dargestellt, die nicht unter die vorliegenden Ansprüche fällt. Die zweite Anordnung 30 ist am Grund des Gewässers 10 angeordnet. Die Wasseroberfläche ist wie in der Figur 1 mit dem Bezugszeichen 11 gekennzeichnet und der Grund des Gewässers 10 ist mit dem Bezugszeichen 31 gekennzeichnet.

Die zweite Anordnung 30 weist ein Rohr 33 auf, durch das Wasser angesaugt wird, wobei die Richtung des Wassers in der Figur 2 mit dem Bezugszeichen 34 angedeutet ist. Die Art und Weise, wie das Wasser angesaugt wird, ist dabei nicht wesentlich.

Die zweite Anordnung 30 kann beispielsweise mit der ersten Anordnung 13 der Figur 1 verbunden sein. In diesem Fall sind die beiden Anordnungen 13, 30 über das Rohr 17 miteinander verbunden und das Wasser wird entsprechend dem Pfeil 25 durch das Rohr 17 angesaugt. Die Bezugszeichen 17 und 25 sind in der Figur 2 in Klammern angegeben.

Nachfolgend wird von dem erstgenannten, allgemeinen Fall ausgegangen, bei dem das Wasser auf beliebige Weise durch das Rohr 33 in Richtung des Pfeils 34 angesaugt wird.

Das Rohr 33 ist mit einem Materialbehälter 36 verbunden, der an sich jegliche Gestalt besitzen kann. Der Materialbehälter 36 ist flüssigkeitsdicht mit dem Rohr 33 verbunden. Weiterhin weist der Materialbehälter 36 einen Bereich auf, der mit Öffnungen oder dergleichen versehen ist, so dass Wasser von außen in den Innenraum des Materialbehälters 36 eintreten kann.

Wie dies in der Figur 2 beispielhaft dargestellt ist, kann der Materialbehälter 36 zylindrisch oder rohrförmig ausgebildet sein. In diesem Fall ist der Materialbehälter 36 an einer seiner beiden Stirnseiten beispielsweise über ein scheibenförmiges Zwischenteil 37 und mit Hilfe von Rohrschellen oder dergleichen mit dem Rohr 33 verbunden. An der anderen Stirnseite ist der Materialbehälter 36 mit einer scheibenförmigen Platte 38 versehen, die eine Mehrzahl von Bohrungen aufweist. Die Platte 38 ist mit dem Materialbehälter 36 beispielsweise verschraubt. Die Durchmesser der Bohrungen in der Platte 38 sind derart gewählt, dass Wasser von außen nach innen in den Materialbehälter 36 eintreten kann.

Mit dem Materialbehälter 36 sind beispielhaft zwei Schellen 41 verbunden. Die Schellen 41 können mit dem Materialbehälter 36 verschraubt sein oder auch nur eine Klemmverbindung mit dem Materialbehälter 36 bilden. Mit den Schellen 41 ist unterhalb des Materialbehälters 36 ein Gewicht 42, beispielsweise eine Steinplatte oder dergleichen, fest verbunden. Dies kann wiederum durch eine Verschraubung oder auf sonstige Weise erfolgen.

Oberhalb des Materialbehälters 36 ist ein Auftriebsbehälter 43 vorhanden. Der Auftriebsbehälter 43 kann durch eine Verschraubung oder auf sonstige Weise mit den Schellen 41 fest verbunden sein. Der Auftriebsbehälter 43 kann beispielsweise zylindrisch oder rohrförmig ausgebildet und an seinen beiden Stirnseiten mit scheibenförmigen Platten oder dergleichen flüssigkeitsdicht verschlossen sein.

Der Auftriebsbehälter 43 ist einerseits mit einem Ende eines Schlauchs 45 verbunden und weist andererseits ein Ventil 46 auf. Der Schlauch 45 besitzt eine Länge, die etwa der Wassertiefe des Gewässers 10 entspricht. Über den Schlauch 45 kann der Auftriebsbehälter 43 mit einem Gas, beispielsweise mit Luft befüllt werden. Über das Ventil 46 kann der Auftriebsbehälter 43 mit Wasser befüllt werden.

An den Schellen 41 ist mindestens ein Ende eines Seils 48 befestigt. Das Seil 48 besitzt eine Länge, die etwa der Wassertiefe des Gewässers 10 entspricht. Das andere Ende des Seils 48 ist an einer Boje 49 befestigt, die auf der Wasseroberfläche 11 des Gewässers 10 schwimmt. An der Boje 49 ist auch das andere Ende des Schlauchs 45 gehalten.

Der Materialbehälter 36 ist mit einem Granulat 51 befüllt. Bei dem Granulat 51 kann es sich um ein grobkörniges kalkhaltiges Granulat handeln, beispielsweise um sogenannten Kalkbruch, also kalkhaltiges, grob gebrochenes Kalkgestein. Bei dem Granulat 51 kann es sich auch um feinkörniges Kalk-Granulat handeln. Das Granulat 51 kann lose in dem Materialbehälter 36 vorhanden sein, oder es kann beispielsweise in einem flüssigkeitsdurchlässigen Sack oder dergleichen enthalten sein, der sich in dem Materialbehälter 36 befindet.

Das Granulat 51 ist derart in dem Materialbehälter 36 vorhanden, dass das Wasser, das durch die Platte 38 in den Innenraum des Materialbehälters 36 angesaugt wird, sich an dem Granulat 51 in Richtung zu dem Rohr 33 entlangbewegt. Das Granulat 51 ist also derart angeordnet, dass das Wasser bei seinem Durchfluss durch den Materialbehälter 36 mit dem Granulat 51 in Berührung kommt.

In dem Materialbehälter 36 kann eine Lochplatte 53 vorhanden sein. Sofern vorhanden, so ist die Lochplatte 53 im Bereich des Bodens des Materialbehälters 36 derart angeordnet, dass sie sich etwa parallel zum Grund 31 des Gewässers 10 erstreckt. Bei einem Durchfluss von Wasser durch den Materialbehälter 36 können kleinere Schmutzteilchen oder dergleichen, die in dem Wasser enthalten sind, durch das Granulat 51 und durch die Lochplatte 53 hindurch zum Boden des Materialbehälters 36 absinken und dort liegen bleiben. Das Granulat 51 kann jedoch im Wesentlichen nicht durch die Lochplatte 53 hindurchtreten.

Es wird nunmehr davon ausgegangen, dass die zweite Anordnung 30 aus dem Wasser entnommen ist. Damit kann der Materialbehälter 36 mit dem Granulat 51 befüllt und das Ventil 46 geöffnet werden. Zum Befüllen des Materialbehälters 36 kann die Platte 38 abgeschraubt und nach dem Befüllen wieder angeschraubt werden. Danach kann die Anordnung 30 in das Wasser abgesetzt werden, wobei die Boje 49 mit dem Ende des Schlauchs 45 und dem Ende des Seils 48 auf der Wasseroberfläche 11 verbleibt.

Aufgrund des Gewichts 42 und des Granulats 51 sowie aufgrund des geöffneten Ventils 46 sinkt die Anordnung 30 in dem Gewässer 10 nach unten. Eventuell in dem Auftriebsbehälter 43 vorhandene Luft entweicht und der Auftriebsbehälter 43 läuft mit Wasser voll. Die Anordnung 30 kommt dann mit dem Gewicht 42 auf dem Grund des Gewässers 10 zum Stehen. In diesem Zustand befindet sich die Anordnung 30 somit am Grund 31 des Gewässers 10 und ist über den Schlauch 46 und das Seil 48 mit der Boje 49 verbunden.

Wie eingangs bereits erwähnt wurde, kann über das Rohr 33 Wasser in Richtung des Pfeils 34 angesaugt werden. Dies kann beispielsweise mit Hilfe der ersten Anordnung 13 durchgeführt werden.

Wird Wasser angesaugt, so tritt das Wasser von außen durch die Platte 38 hindurch in den Innenraum des Materialbehälters 36 und wird durch den Materialbehälter 36 hindurch in Richtung zu dem Rohr 33 gesaugt. Das Wasser strömt damit an dem Granulat 51 vorbei. Bei diesem Vorbeiströmen kann das Wasser Kalkteilchen aus dem Granulat 51 herauslösen und aufnehmen. Diese Kalkteilchen werden somit zusammen mit dem Wasser in Richtung des Pfeils 34 gesaugt.

Das Wasser mit den darin enthaltenen Kalkteilchen wird beispielsweise mit Hilfe der Anordnung 13 in dem Gewässer 10 nach oben gefördert und fließt im Bereich der Wasseroberfläche 11 wieder in das Gewässer 10 zurück. Die in dem Wasser enthaltenen Kalkteilchen werden somit an die Wasseroberfläche 11 transportiert, von wo sie wieder nach unten absinken. Es entsteht somit nicht nur eine Zirkulation des Wassers innerhalb des Gewässers 10, sondern auch die Kalkteilchen zirkulieren in dem Gewässer 10.

Handelt es sich bei dem Gewässer 10 um ein sogenanntes saures Gewässer, dessen Wasser also einen sauren ph-Wert aufweist, so ist es mit Hilfe der beschriebenen Anordnung 30 und mit Hilfe des vorstehend beschriebenen Vorgehens möglich, das Wasser mittels der Kalkteilchen zu entsäuern. Damit kann eine Verbesserung der Qualität des Wassers erreicht werden.

Zur Wartung der zweiten Anordnung 30 und/oder zum Austausch des Granulats 51 kann die zweite Anordnung 30 in dem Gewässer 10 nach oben angehoben werden. Der Ort, wo die zweite Anordnung 30 in dem Gewässer 10 vorhanden ist, kann dabei anhand der Boje 49 festgestellt werden. Über das an der Boje 49 zugängliche Ende des Schlauchs 45 wird dann Luft in den Auftriebsbehälter 43 gepumpt. Dies kann beispielsweise von einem Boot aus mit Hilfe einer Pumpe durchgeführt werden. Über das Ventil 46 wird das Wasser aus dem Auftriebsbehälter 43 verdrängt, so dass der Auftriebsbehälter 43 langsam mit Luft gefüllt wird.

Ist ausreichend Luft in dem Auftriebsbehälter 43 vorhanden, so wird die gesamte Anordnung 30 von dem Auftriebsbehälter 43 nach oben angehoben. Die Anordnung 30 steigt zur Wasseroberfläche 11 auf. Es kann nunmehr das Ventil 46 geschlossen werden und gegebenenfalls auch das obere Ende des Schlauchs 45 mit einem Stopfen oder dergleichen verschlossen werden, so dass die Anordnung 30 nicht wieder absinkt, sondern im Wesentlichen an der Wasseroberfläche 11 gehalten wird. Nach der Wartung bzw. nach dem Austausch des Granulats 51 kann die Anordnung 30 wieder auf den Grund 31 des Gewässers 10 abgesenkt werden, nachdem das Ventil 46 wieder geöffnet und der gegebenenfalls vorhandene Stopfen wieder entfernt worden ist.

Alternativ kann die Anordnung 30 auch beispielsweise in das Boot aufgenommen werden, damit dort die Wartung durchgeführt wird oder der Materialbehälter 36 mit dem Granulat 51 befüllt wird. Gegebenenfalls kann dann auf das Ventil 46 und den Stopfen verzichtet werden.

Es wird darauf hingewiesen, dass die zweite Anordnung 30 nicht zwingend auf dem Grund 31 des Gewässers 10 angeordnet sein muss, sondern auch zwischen dem Grund 31 und der Wasseroberfläche angeordnet sein kann. Dies kann durch ein entsprechendes Gewicht 42 und/oder einen entsprechend mit Luft befüllten Auftriebsbehälter 43 erreicht werden. Auch in diesem Fall wird eine Entsäuerung des Gewässers 10 erreicht, da die aus der zweiten Anordnung 30 abgegebenen Kalkteilchen auf den Grund 31 des Gewässers absinken.

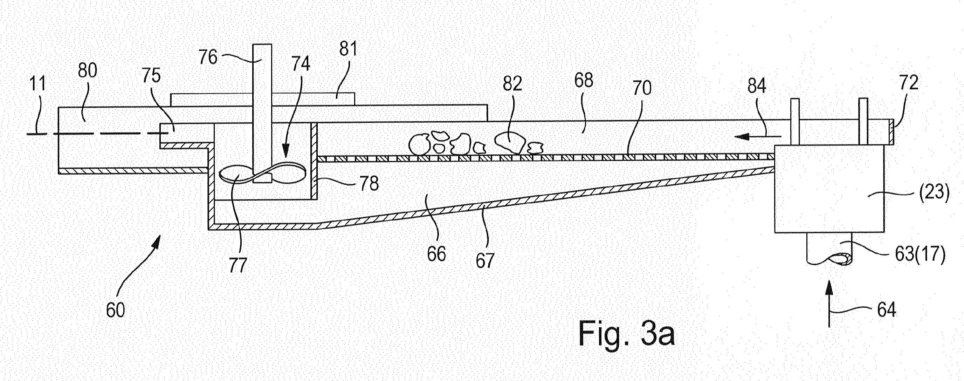

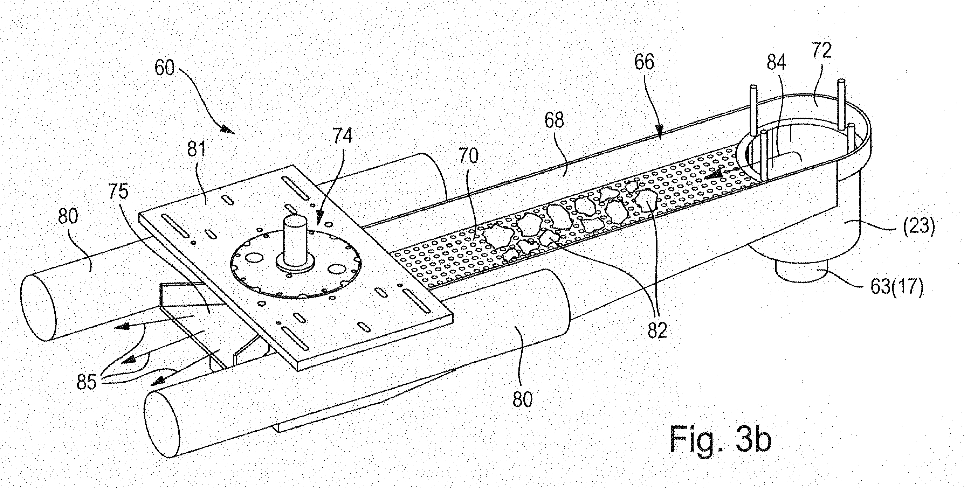

In den Figuren 3a, 3b ist eine erfindungsgemäße Anordnung 60 dargestellt. Die Anordnung 60 ist - im Unterschied zu der Anordnung 30 der Figur 2 - nicht am Grund 31 des Gewässers 10 angeordnet, sondern im Bereich der Wasseroberfläche 11.

Die zweite Anordnung 60 weist ein Rohr 63 auf, durch das Wasser angesaugt wird, wobei die Richtung des Wassers in der Figur 3a mit dem Bezugszeichen 64 angedeutet ist. Die Art und Weise, wie das Wasser angesaugt wird, ist dabei - wie bereits erwähnt wurde - nicht wesentlich.

Die zweite Anordnung 60 ist mit der ersten Anordnung 13 der Figur 1 verbunden. In diesem Fall sind die beiden Anordnungen 13, 60 über das Rohr 17 und das Schaufelrad 23 miteinander gekoppelt. Die Bezugszeichen 17 und 23 sind in den Figuren 3a, 3b in Klammern angegeben.

Die zweite Anordnung 60 weist eine Wanne 66 auf, die aus einem Boden 67 und zwei Seitenwänden 68 aufgebaut ist. Die Wanne 66 kann einen Deckel besitzen; dies ist aber nicht erforderlich, weshalb in den Figuren 3a, 3b auch kein Deckel dargestellt ist.

Die Wanne 66 bildet einen Quader, dessen Länge wesentlich größer ist als dessen Höhe und auch größer ist als dessen Breite. Hierzu sind der Boden 67 und die beiden Seitenwände 68 der Wanne 66 jeweils etwa rechteckförmig ausgebildet und die beiden Seitenwände 68 der Wanne 66 sind etwa parallel zueinander ausgerichtet.

In der Wanne 66 ist ein Lochblech 70 vorhanden, das sich etwa in dieselbe Richtung erstreckt wie der Boden 67. Aus der Figur 3a ist ersichtlich, dass der Boden 67 und die Wanne 70 auch unter einem Winkel zueinander ausgerichtet sein können.

Wesentlich ist, dass das Lochblech 70 derart in der Wanne 66 befestigt ist, dass oberhalb und unterhalb des Lochblechs 70 Wasser in der Wanne 66 vorhanden sein kann. Insbesondere aus der Figur 3b ist ersichtlich, dass sich das Lochblech 70 über die gesamte Länge und Breite der Wanne 66 erstreckt.

Die Wanne 66 ist an ihrem einen Ende flüssigkeitsdicht mit dem Rohr 63 verbunden. Die Verbindung ist dabei derart angeordnet, dass das Wasser, das durch das Rohr 63 in Richtung des Pfeils 64 angesaugt wird, oberhalb des Lochblechs 70 in die Wanne 66 fließt. Hierzu kann es erforderlich sein, dass das Rohr 63 und/oder die Wanne 66 mit einer oder mehreren Wänden versehen ist, die das Wasser von dem Rohr 63 in den oberen Bereich der Wanne 66 leitet/leiten.

In den Figuren 3a, 3b handelt es sich dabei um eine Wand 72, die halbkreisförmig ausgebildet ist und sich von der einen zu der anderen Seitenwand 68 der Wanne 66 erstreckt. Die Wand 72 kann einerseits direkt mit dem Rohr 63 verbunden sein. Andererseits ist es auch möglich, wie in dem Ausführungsbeispiel der Figuren 3a, 3b dargestellt, dass die Wand 72 indirekt über das Gehäuse des Schaufelrads 23 mit dem Rohr 63 verbunden ist.

An ihrem anderen Ende weist die Wanne 66 eine Fördereinrichtung 74 und einen Auslass 75 auf. Die Fördereinrichtung 74 ist derart ausgebildet, dass von ihr Wasser aus dem Bereich unterhalb des Lochblechs 70 in Richtung zu dem Auslass 75 gefördert wird.

Wie insbesondere aus der Figur 3a hervorgeht, kann es sich bei der Fördereinrichtung 74 beispielsweise um eine Welle 76 und ein Schaufelrad 77 handeln, die zum Beispiel von einem nichtdargestellten Elektromotor angetrieben werden können. Das Schaufelrad 77 kann von einer rohrförmigen Wand 78 umgeben sein, die sich einerseits in den Bereich der Wanne 66 unterhalb des Lochblechs 70 erstreckt und dort offen ist, und die sich andererseits in Richtung zu dem Auslass 75 erstreckt und mit diesem verbunden ist. Die Wand 78 und die Welle 76 sind dabei in einer etwa vertikalen Richtung ausgerichtet. Im Betrieb der Fördereinrichtung 74 der Figur 3a kann damit Wasser von dem Bereich unterhalb des Lochblechs 70 in Richtung zu dem Auslass 75 gefördert werden.

Auf beiden Seiten der Wanne 66 ist jeweils ein Schwimmer 80 befestigt. Die Wanne 66 schwimmt damit auf dem Gewässer 10 und ist somit etwa horizontal ausgerichtet. Der Auslass 75 befindet sich etwa im Bereich der Wasseroberfläche 11 des Gewässers 10. Insbesondere sind die Schwimmer 80 bzw. der Auslass 75 derart angeordnet, dass, wie in der Figur 3a dargestellt, der Auslass 75 sich nur geringfügig unterhalb der Wasseroberfläche 11 befindet bzw. die Wasseroberfläche 11 sich in vertikaler Richtung etwa in der Mitte des Auslasses 75 befindet.

Die beiden Schwimmer 80 können über eine Platte 81 miteinander verbunden sein, wobei auf oder an der Platte 81 dann Bauteile der Fördereinrichtung 74, beispielsweise der erwähnte Elektromotor, befestigt sein können.

Die Wanne 66, und zwar der Bereich oberhalb des Lochblechs 70, ist mit einem Granulat 82 befüllt. Bei dem Granulat 82 kann es sich um ein grobkörniges kalkhaltiges Granulat handeln, beispielsweise um sogenannten Kalkbruch, also kalkhaltiges, grob gebrochenes Kalkgestein. Bei dem Granulat 82 kann es sich auch um feinkörniges Kalk-Granulat handeln. Das Granulat 82 kann lose auf dem Lochblech 70 vorhanden sein, oder es kann beispielsweise in einem flüssigkeitsdurchlässigen Sack oder dergleichen enthalten sein, der auf dem Lochblech 70 angeordnet ist.

Wie erwähnt wurde, kann Wasser aus dem Gewässer 10 in Richtung des Pfeils 64 angesaugt und durch das Rohr 63 gefördert werden. Dieses Wasser fließt dann in die Wanne 66, und zwar in den Bereich oberhalb des Lochblechs 70. Dies ist in den Figuren 3a, 3b mit einem Pfeil 84 kenntlich gemacht. Das Wasser strömt dann an dem Granulat 82 vorbei und tritt durch das Lochblech 70 hindurch in den Bereich der Wanne 66, die sich unterhalb des Lochblechs 70 befindet. Von dort wird das Wasser mit Hilfe der Fördereinrichtung 74 in Richtung zu dem Auslass 75 gefördert und fließt dann aus dem Auslass 75 zurück in das Gewässer 10 Letzteres ist in der Figur 3b mit Hilfe von Pfeilen 85 kenntlich gemacht.

Bei dem Vorbeiströmen des Wassers an dem Granulat 82 kann das Wasser Kalkteilchen aus dem Granulat 82 herauslösen und aufnehmen. Diese Kalkteilchen werden somit zusammen mit dem Wasser in Richtung zu dem Auslass 75 gefördert und entsprechend dem Pfeil 85 in das Gewässer 10 abgegeben. Die in dem Wasser enthaltenen Kalkteilchen fließen somit in den Bereich der Wasseroberfläche 11, von wo sie wieder nach unten absinken können. Es entsteht somit eine Zirkulation von Kalkteilchen in dem Gewässer 10.

Handelt es sich bei dem Gewässer 10 um ein sogenanntes saures Gewässer, dessen Wasser also einen sauren ph-Wert aufweist, so ist es mit Hilfe der beschriebenen zweiten Anordnung 60 und mit Hilfe des vorstehend beschriebenen Vorgehens möglich, das Wasser mittels der Kalkteilchen zu entsäuern. Damit kann eine Verbesserung der Qualität des Wassers erreicht werden.

Es wird darauf hingewiesen, dass bei einer Verwendung der ersten Anordnung 13 der Figur 1 zusammen mit der zweiten Anordnung 60 der Figuren 3a, 3b das Wasser nicht zwingend vom Grund 31 des Gewässers 10 angesaugt werden muss, sondern auch aus einem Bereich zwischen dem Grund 31 und der Wasseroberfläche 11 angesaugt werden kann. Auch in diesem Fall wird eine Entsäuerung des Gewässers 10 erreicht, da die aus der zweiten Anordnung 60 abgegebenen Kalkteilchen auf den Grund 31 des Gewässers absinken.

Weiterhin wird darauf hingewiesen, dass auch mehrere zweite Anordnungen 60 vorhanden sein können, die einer einzigen Anordnung 13 zugeordnet sind. Die erste Anordnung kann dann insbesondere mehrere Rohre 63 aufweisen, über die Wasser aus unterschiedlichen Bereichen des Gewässers angesaugt werden kann, und an die jeweils eine der zweiten Anordnungen 60 angeschlossen ist.

Die Bauteile der ersten und zweiten Anordnungen 13, 30, 60 können vorzugsweise aus Blechen hergestellt werden, beispielsweise aus Edelstahlblechen. Gegebenenfalls können zumindest einige der Bauteile auch aus Kunststoff bestehen. Die gesamte Vorrichtung zur Aufbereitung des Wassers kann vorzugsweise auf einer durch Schwimmer oder dergleichen gebildeten Insel in dem Gewässer 10 angeordnet sein. Der Elektromotor 21 der ersten Anordnung 13 und der gegebenenfalls vorhandene Elektromotor zum Antrieb der Fördereinrichtung 74 der zweiten Anordnung 60 kann bzw. können vorzugsweise mit Hilfe einer photovoltaischen Energieerzeugungsanlage betrieben werden.

## Patentansprüche

1. Vorrichtung zur Aufbereitung von Wasser eines Gewässers (10), mit einer ersten Anordnung (13), mit der das Wasser des Gewässers (10) durch ein Rohr (17, 63), welches sich in etwa vertikaler Richtung erstreckt, nach oben förderbar ist, wobei eine mit der ersten Anordnung (13) verbundene zweite Anordnung (60) vorhanden ist, die ein kalkhaltiges Granulat (82) enthält, an dem das Wasser vorbeiströmen kann, so dass das Wasser Kalkteilchen aufnehmen kann, **dadurch gekennzeichnet,**
- **dass** ein oberes Ende (18) des Rohres (17, 63) sich unterhalb der Wasseroberfläche (11) befindet;
- **dass** die erste Anordnung (13) eine von Schwimmern (15) getragene Plattform (16) aufweist,
- **dass** auf einer Unterseite der Plattform (16) das Rohr (17, 63) angeordnet ist,
- **dass** ein Elektromotor (21) auf der Plattform (16) montiert ist, der über eine Welle (22) ein Schaufelrad (23) im Inneren des Rohrs (17, 63) antreibt, wobei die Welle (22) etwa koaxial zu dem Rohr (17, 63) verläuft und sich von dem Elektromotor (21) bis in den oberen Bereich des Rohrs (17, 63) unterhalb des oberen Endes (18; des Rohrs erstreckt, und wobei das Schaufelrad (23) einem freien Ende der Welle (22) befestigt ist;
- **dass** die zweite Anordnung (60) eine Fördereinrichtung (74) aufweist, mit der das Wasser von dem Rohr (17, 63) in Richtung zu einem Auslass (75) förderbar und im Bereich der Wasseroberfläche (11) in das Gewässer (10) abgebbar ist,
- **dass** die zweite Anordnung (60) im Bereich der Wasseroberfläche (11) des Gewässers (10) angeordnet ist,
- **dass** die zweite Anordnung (60) eine Wanne (66) aufweist, in der das Granulat (82) enthalten ist, die mit dem Rohr (17, 63) verbunden ist, und durch die das Wasser hindurchführbar ist, und
- **dass** die Wanne (66) ein Lochblech (70) aufweist, auf dessen Oberseite das Granulat (82) abgelegt ist.

2. Vorrichtung nach Anspruch 1, wobei die Fördereinrichtung (74) ein antreibbares Schaufelrad (77) aufweist, mit dem das Wasser von dem Rohr (17, 63) an dem Granulat (82) vorbei zu dem Auslass (75) förderbar ist.

## Claims

1. Device for treating water of a water body (10), having a first arrangement (13) by means of which the water of the water body (10) can be conveyed upwards through a pipe (17, 63) which extends in approximately vertical direction, a second arrangement (60) being present, which is connected to the first arrangement (13) and contains a calcareous granulate (82), past which the water can flow, so that the water can absorb lime particles, **characterized in that** the second arrangement (60) is connected to the first arrangement (13) and contains a calcareous granulate (82), which the water can flow past, so that the water can absorb lime particles, and **in that** the second arrangement (60) contains a calcareous granulate (82), which the water can flow past, so that the water can absorb lime particles, **characterized in that** the second arrangement (60) contains a calcareous granulate (82), which the water can flow past, so that the water can absorb lime particles, **characterized**
- **in that** an upper end (18) of the pipe (17, 63) is located below the water surface (11);
- **in that** the first assembly (13) has a platform (16) carried by floats (15),
- **in that** the pipe (17, 63) is arranged on an underside of the platform (16),
- **in that** an electric motor (21) is mounted on the platform (16), which drives a paddle wheel (23) inside the pipe (17, 63) via a shaft (22), the shaft (22) extending approximately coaxially with the pipe (17, 63) and extending from the electric motor (21) into the upper region of the pipe (17, 63) below the upper end (18) of the pipe (17, 63), and the paddle wheel (23) being fastened to a free end of the shaft (22) ;
- **in that** the second arrangement (60) has a conveying device (74) with which the water can be conveyed from the pipe (17, 63) in the direction of an outlet (75) and can be discharged into the water body (10) in the region of the water surface (11),
- **in that** the second arrangement (60) is arranged in the region of the water surface (11) of the water body (10),
- **in that** the second arrangement (60) has a trough (66) in which the granulate (82) is contained, which is connected to the pipe (17, 63) and through which the water can be passed, and in that the second arrangement (60) has a tank (66) in which the granulate (82) is contained, which is connected to the pipe (17, 63) and through which the water can be passed, and in that the second arrangement (60) has a tank (66) in which the granulate (82) is contained.
- **in that** the trough (66) has a perforated plate (70) on the upper side of which the granules (82) are deposited.

2. Device according to claim 1, wherein the conveying device (74) has a drivable blade wheel (77) with which the water can be conveyed from the pipe (17, 63) past the granulate (82) to the outlet (75).

## Revendications

1. Dispositif de traitement d'eau d'une étendue d'eau (10), comprenant un premier ensemble (13) par l'intermédiaire duquel l'eau de l'étendue d'eau (10) peut être transportée vers le haut à travers un tube (17, 63) qui s'étend dans la direction à peu près verticale, dans lequel il y a un deuxième ensemble (60) qui est relié au premier ensemble (13) et qui contient des granulés calcaires (82) devant lesquels l'eau peut s'écouler de sorte que l'eau peut absorber des particules de chaux, **caractérisé par le fait**
- **qu'**une extrémité supérieure (18) du tube (17, 63) est située au-dessous de la surface d'eau (11);
- **que** ledit premier ensemble (13) comprend une plateforme (16) supportée par des flotteurs (15),
- **que** le tube (17, 63) est disposé sur une face inférieure de la plateforme (16),
- **qu'**un moteur électrique (21) est monté sur la plateforme (16), qui entraîne via un arbre (22) une roue à aubes (23) à l'intérieur du tube (17, 63), dans lequel ledit arbre (22) s'étend à peu près coaxialement au tube (17, 63) et s'étend depuis le moteur électrique (21) jusque dans la zone supérieure du tube (17, 63) au-dessous de l'extrémité supérieure (18) du tube, et dans lequel ladite roue à aubes (23) est fixée à une extrémité libre de l'arbre (22);
- **que** ledit deuxième ensemble (60) comprend un dispositif de transport (74) par l'intermédiaire duquel l'eau peut être transportée depuis le tube (17, 63) vers une sortie (75) et peut être délivrée au niveau de la surface d'eau (11) dans l'étendue d'eau (10),
- **que** ledit deuxième ensemble (60) est disposé au niveau de la surface d'eau (11) de l'étendue d'eau (10),
- **que** ledit deuxième ensemble (60) comprend une cuve (66) qui contient les granulés (82), qui est reliée au tube (17, 63) et à travers laquelle on peut faire passer l'eau, et
- **que** ladite cuve (66) présente une tôle perforée (70) sur la face supérieure de laquelle les granulés (82) sont déposés.

2. Dispositif selon la revendication 1, dans lequel ledit dispositif de transport (74) présente une roue à aubes (77) entraînable par l'intermédiaire de laquelle l'eau peut être transportée depuis le tube (17, 63) jusqu'à la sortie (75) en passant par les granulés (82).
